# FASCICULE DE BREVET EUROPEEN

(11) **EP 1 277 984 B1**
(45) Date de publication et mention de la délivrance du brevet: **30.08.2006**
(21) Numéro de dépôt: 02291683.7
(22) Date de dépôt: 05.07.2002
(51) Int. Cl.: F16F 7/08

(54) **Dispositif d'amortissement de mouvement entre deux pièces cylindriques coulissant l'une sur l'autre en translation et frottement**
Vorrichtung zum Dämpfen der Bewegung von zwei zylindrischen Stücken die entgegeneinander sich schiebend bewegen mit Reibung
Device for the damping of movement between two cylindrical pieces sliding one on the other in translation and frictional engagement

(30) Priorité: 20.07.2001 FR 0109737
(43) Date de publication de la demande: 22.01.2003
(73) Titulaire: Enidine GmbH, 79415 Bad Bellingen-Rheinweiler (DE)
(72) Inventeur: Domange, Bruno, 75017 Paris (FR); Costes, Eric, 78170 La Celle Saint Cloud (FR)
(74) Mandataire: Maucher, Wolfgang

(56) Documents cités:
- EP-A- 0 198 179
- EP-A- 0 702 165
- DE-A- 2 158 382
- DE-A- 2 524 592
- DE-A- 4 304 389
- US-A- 2 615 535
- US-A- 3 059 916
- US-A- 3 382 955

## Description

L'invention a pour objet un dispositif pour la mise en oeuvre d'amortissement de mouvement et/ou de chocs et/ou de vibrations entre deux pièces dont l'une pourra être une structure (par exemple un butoir, un mur de fixation) par rapport à laquelle se fera l'amortissement, et l'autre sera la pièce (par exemple un chariot, une canalisation) dont le mouvement, le choc subi, ou la vibration, devra être amorti, ou encore entre deux pièces reliées entre elles, par exemple une structure d'aile d'avion.

Des systèmes d'amortissement de chocs sont nécessaires par exemple dans le domaine ferroviaire pour amortir le choc d'un chariot heurtant un butoir. Il existe de nombreuses technologies pour réaliser de tels dispositifs amortisseurs : hydraulique, pneumatique, viscoélastique, à friction, etc.. Ces systèmes sont caractérisés par la nécessité d'absorber en un très court instant, mais avec une périodicité très faible, de très grands efforts et énergies à dissiper. De façon typique, les efforts à dissiper sont de l'ordre de quelques kilojoules à quelques mégajoules, tandis que le nombre de cycles est réduit de façon typique à quelques centaines de cycles en quelques jours, voire en quelques mois.

Des systèmes d'amortissement de vibrations se caractérisent par une amplitude et une fréquence. Ces deux grandeurs (amplitude et fréquence) peuvent varier au cours du temps. Les excitations engendrées par des machines tournantes, des écoulements de fluides, des sollicitations extérieures par exemple météorologiques (vibrations d'un pont suspendu), etc., peuvent entraîner des mouvements vibratoires de grande amplitude sous l'effet du phénomène connu de résonance. Là encore il existe de nombreuses technologies pour réaliser des dispositifs amortisseurs de type notamment : hydraulique, pneumatique, viscoélastique, à friction, etc.. Contrairement au cas des chocs, la dissipation d'énergie pour chaque cycle est peu importante, typiquement de quelques joules, mais le nombre de cycles de fonctionnement est généralement élevé, typiquement de quelques centaines à quelques milliers de cycles par minute.

Dans ces conditions, on comprend que les systèmes d'amortissement de vibrations et de chocs travaillent en général de façon très différente, bien que pouvant nécessiter la dissipation dans le temps d'énergies comparables, même si la dissipation instantanée d'énergie est très différente.

US 3,382,955 décrit un dispositif pour la mise en oeuvre de mouvement et/ou de chocs entre deux pièces. Dans cet état de la technique, des segments sont montés sur une pièce intérieure pour frotter contre une pièce cylindrique extérieure du dispositif d'amortissement après 941 une force de mouvement exercée au dispositif est transférée faux segments par des moyens compliquées.

L'invention propose une solution nouvelle qui en fait s'adapte à tous les systèmes d'amortissement de mouvement, qu'il s'agisse de chocs instantanés demandant l'amortissement d'une grande énergie, ou de chocs ou vibrations répétés de faible (voire très faible) amplitude mais de fréquence plus ou moins importante, demandant là encore l'amortissement dans le temps de grandes énergies.

C'est ainsi que l'invention propose un dispositif pour la mise en oeuvre d'amortissement de mouvement et/ou de chocs et/ou de vibrations entre deux pièces cylindriques coulissant l'une sur l'autre en translation et frottement, dans lequel l'amortissement est réalisé par application d'une force exercée radialement perpendiculairement au mouvement de translation des deux pièces par au moins un segment élastique entourant l'une des pièces et intérieur à l'autre, solidaire en translation de l'une des pièces, et appliquant ladite force de frottement sur l'autre pièce, où ledit dispositif est du type comportant deux pièces cylindriques coulissant l'une sur l'autre solidaires l'une de l'autre en translation et frottement, où au moins un segment élastique en acier ou analogue est monté solidaire de l'une première des pièces et agit sur une douille de frottement comportant éventuellement un revêtement d'un matériau de friction que ledit segment applique en déformation radiale sur la surface cylindrique en regard de la deuxième pièce, et ladite douille comporte au moins une fente ou coupure allant d'un bord à l'autre de ladite douille dans le sens longitudinal, caractérisé en ce que le ou les segment(s) sont monté(s) intérieurement à la première pièce et applique(nt) ladite douille sur la surface externe de la deuxième pièce.

Selon une autre caractéristique, on prévoit des moyens permettant de faire varier ladite force radiale.

Dans le dispositif au moins un segment élastique en acier ou analogue est monté solidaire de l'une première des pièces et agit sur une douille de frottement comportant éventuellement un revêtement d'un matériau de friction que ledit segment applique en déformation radiale sur la surface cylindrique en regard de la deuxième pièce. Un alliage tel que le cupro-béryllium est particulièrement bien adapté.

De préférence le dispositif se caractérise en ce qu'il comporte plusieurs segments qui sont montés serrés sur ladite première pièce à l'intérieur d'une cage solidaire de ladite pièce. Avantageusement les segments sont répartis axialement le long de ladite première pièce par exemple au moyen de bagues d'entretoisement, bien que pour certaines applications de telles bagues puissent être omises.

Avec une telle disposition générale, on observe que compte tenu de l'extrême rigidité axiale des segments qui permet de développer très rapidement un effort s'opposant au mouvement, il est possible d'obtenir dans des cas extrêmes des temps de réponse beaucoup plus rapides du système, qu'il n'est pas possible d'obtenir avec des dispositifs dans lesquels on reste tributaire d'une certaine élasticité des matériaux et/ou des fluides utilisés rendant de tels dispositifs inaptes en particulier à l'amortissement de mouvements vibratoires de très faible amplitude, par exemple de quelques dixièmes de millimètre.

Un autre avantage considérable de l'invention est que l'amortissement obtenu est pratiquement indépendant de la vitesse de la sollicitation, par exemple dans une plage allant de 0 à 200 m/s, et également de la température de fonctionnement à laquelle le système peut être exposé, et cela dans des plages très larges par exemple allant de - 200°C à + 200°C.

L'invention et sa mise en oeuvre apparaîtront plus clairement de la description détaillée qui va suivre faite en référence aux dessins annexés dans lesquels
la figure 1 montre en coupe axiale un dispositif conçu selon l'invention;
la figure 2 montre un exemple d'application d'un dispositif de l'invention à l'amortissement de la vibration d'une tuyauterie.

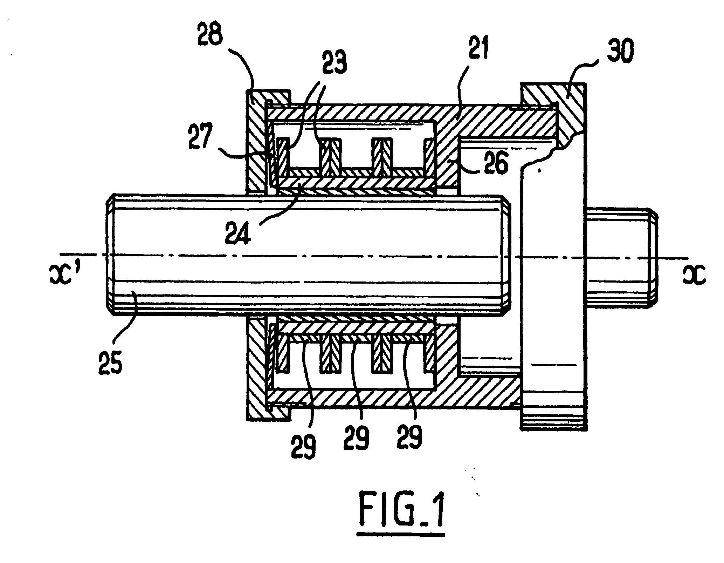

On va maintenant décrire, en relation avec la figure 1, une solution dans laquelle les segments sont montés intérieurement à une première pièce, formant en quelque sorte cylindre, en étant solidaire de cette pièce et où les segments appliquent une douille qui vient frotter extérieurement sur une seconde pièce, formant en quelque sorte piston.

Selon le mode de réalisation illustré à la figure 1, le dispositif comporte, solidarisés d'une première pièce 21, un certain nombre de segments 23, qui exercent une force de compression radiale sur une pièce intermédiaire 24 en forme de douille fendue d'un bord à l'autre, par exemple parallèlement à l'axe x'x du dispositif ou en hélice. La pièce 24 qui présente avantageusement sur sa face intérieure un revêtement de friction approprié, vient porter contre la surface cylindrique extérieure de la seconde pièce 25 sur laquelle coulisse axialement la première pièce 21. Les pièces 21 et 24 peuvent être réalisées par exemple en acier de qualité appropriée.

Les segments 23 sont positionnés en étant solidarisés de la pièce 21 en étant pressés contre l'épaulement 26 de cette pièce au moyen d'une rondelle élastique 27 qui s'appuie elle-même sur un couvercle 28 par exemple en acier vissé à l'extrémité de la pièce 21. La force de compression axiale exercée par la rondelle 27 sur l'ensemble doit être supérieure à la force de frottement maximale qu'est susceptible de supporter le dispositif de façon à empêcher tout jeu axial des segments 23 par rapport à la pièce 21. Dans l'exemple illustré, six segments 23 ont été utilisés entretoisés par trois bagues 29. Dans un tel montage, on voit que là encore les segments 23 sont en quelque sorte enfermés dans une cage constituée de l'épaulement 26, de la rondelle 27 s'appuyant sur le couvercle 28 et de la douille 24. À son extrémité opposée au couvercle 28 est monté un autre couvercle 30 sur la pièce 21 qui l'obture à cette extrémité, l'ensemble se présentant ainsi sous la forme d'un vérin d'amortissement à friction.

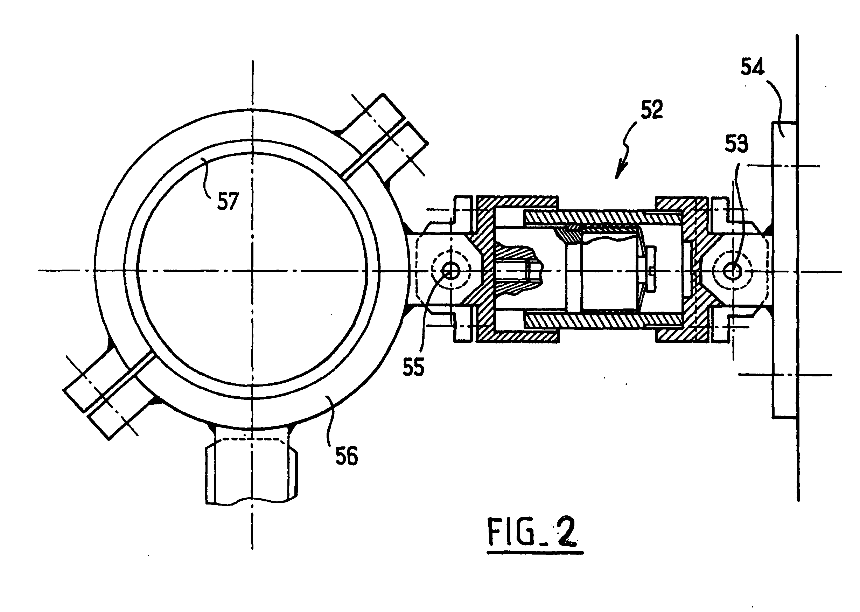

En relation avec la figure 2, on décrira une application d'un dispositif conforme à l'invention à l'amortissement de la vibration d'une canalisation. Le dispositif d'amortissement conforme à l'invention référencé dans son ensemble 52 ne sera pas décrit, pouvant être du type décrit à la figure 1. Le dispositif qui se présente de façon générale comme un vérin à action de frottement est fixé à l'une de ses extrémités, par exemple en 53 par le moyen d'une rotule à un mur 54 ou tout autre structure résistante d'appui. À son autre extrémité, en 55, le dispositif est fixé également au moyen d'une rotule à un collier 56 qui vient enserrer la canalisation 57 dont les vibrations doivent être amorties. Pour que le dispositif soit efficace, il faut veiller soigneusement à ce qu'il n'existe pas de jeu au niveau des fixations à chaque extrémité du dispositif amortisseur et au niveau des fixations à la structure résistante 54 et à la canalisation 57.

Dans une réalisation pratique, on avait choisi les caractéristiques suivantes :
-- course du dispositif amortisseur ± 10 mm,
-- force de freinage : adaptable de 80 N à 380 N selon le nombre des segments utilisés,
-- encombrement : diamètre extérieur ≈ 40 mm,
-- diamètre intérieur du frotteur ≈ 28,5 mm,
-- longueur intérieure du frotteur ≈ 20 mm.

Les segments étaient réalisés dans un feuillard en cupro-béryllium d'épaisseur 1,5 mm.

La force de friction mesurée en Newton (N) est indiquée dans le tableau suivant ainsi que la longueur de frotteur occupée par les segments.

| Force de friction (N) | Nombre de segments | Longueur occupée par les segments (mm) |
|---|---|---|
| 80 | 3 | 4,5 |
| 230 | 8 | 12 |
| 380 | 13 | 19,5 |

Bien entendu l'invention n'est nullement limitée aux modes de réalisation illustrés qui n'ont été donnés qu'à titre d'exemple.

En particulier, on peut prévoir de nombreuses possibilités de réglage diverses de la force de friction par action progressive à commande mécanique ou hydraulique d'ouverture et de fermeture des segments, par l'action d'une came commandée en rotation ou d'une came commandée en translation ou de poussoirs commandés de façon mécanique ou hydraulique.

De même, bien que les réalisations illustrées fassent appel à des formes cylindriques circulaires de la première et de la deuxième pièce, d'autres sections non circulaires peuvent être choisies, en particulier elliptiques, plus ou moins plates.

## Revendications

1. Dispositif pour la mise en oeuvre d'amortissement de mouvement et/ou de chocs et/ou de vibrations entre deux pièces cylindriques (21,25) coulissant l'une sur l'autre en translation et frottement, dans lequel l'amortissement est réalisé par application d'une force exercée radialement perpendiculairement au mouvement de translation des deux pièces par au moins un segment élastique (23) entourant l'une des pièces (25) et intérieur à l'autre (21), solidaire en translation de l'une des pièces (21), et appliquant ladite force de frottement sur l'autre pièce (25),
où ledit dispositif est du type comportant deux pièces cylindriques (21, 25) coulissant l'une sur l'autre solidaires l'une de l'autre en translation et frottement, où au moins un segment élastique (23) en acier ou analogue est monté solidaire de l'une première des pièces (21) et agit sur une douille (24) de frottement comportant éventuellement un revêtement d'un matériau de friction que ledit segment applique en déformation radiale sur la surface cylindrique en regard de la deuxième pièce (25), et ladite douille comporte au moins une fente ou coupure allant d'un bord à l'autre de ladite douille dans le sens longitudinal,
**caractérisé en ce que** le ou les segment(s) (23) sont monté(s) intérieurement à la première pièce (21) et applique(nt) ladite douille sur la surface externe de la deuxième pièce (25).

2. Dispositif selon la revendication 1, **caractérisée en ce que** le ou les segments ont une extrême rigidité axiale qui permet de développer très rapidement un effort s'opposant au mouvement.

3. Dispositif selon la revendication 1 ou 2, dans lequel des moyens (49) permettant de faire varier ladite force radiale sont prévus.

4. Dispositif selon la revendication 1, dans lequel le dispositif comporte plusieurs segments et lesdits segments sont montés sur ladite première pièce à l'intérieur d'une cage solidaire de ladite pièce.

5. Dispositif selon la revendication 4, **caractérisé en ce qu'**une rondelle élastique (27) dont la force axiale est supérieure à la force à amortir est prévue maintenant lesdits segments dans ladite cage et assurant le blocage en translation axiale de la douille de frottement par rapport à la première pièce sur laquelle sont montés lesdits segments.

6. Dispositif selon l'une quelconque des revendications 1, 4
ou 5, **caractérisée en ce que** lesdits segments sont répartis axialement le long de ladite première pièce au moyen de bagues d'entretoisement (29).

## Claims

1. Apparatus for implementing the muffling or absorption of movement and/or shock and/or vibration between two cylindrical parts (21, 25) sliding one on the other in translational and frictional movement, wherein the absorption is achieved by applying a force exerted radially and perpendicularly to the translational movement of the two parts by at least one elastic segment (23) surrounding one of the parts (25) and inside the other (21), which is fixed in translation with one of the parts (21), and applying said frictional force to the other part (25),
wherein said device is of the type comprising two cylindrical parts (21, 25) sliding one on the other, firmly attached to one another, in translational and frictional movement, where at least one elastic segment (23) made of steel or the like is mounted to be integral with a first one of the parts (21) and acts on a friction sleeve (24) which optionally comprises a covering of a friction material which said segment applies in radial deformation to the cylindrical surface facing the second part (25), and said sleeve comprises at least one slot or cut going from one edge of said sleeve to the other, in the longitudinal direction,
**characterised in that** the segment or segments (23) is or are mounted inside the first part (21) and apply said sleeve to the outer surface of the second part (25).

2. Device according to claim 1, **characterised in that** the segment or segments has or have extreme axial rigidity which makes it possible to develop a force opposing movement very rapidly.

3. Device according to claim 1 or 2, wherein means (49) enabling said radial force to be varied are provided.

4. Device according to claim 1, wherein the device comprises a plurality of segments and said segments are mounted on said first part inside a cage which is integrally attached to said part.

5. Device according to claim 4, **characterised in that** an elastic disc (27) the axial force of which is greater than the force to be muffled is provided, holding said segments in said cage and ensuring that the friction sleeve is secured against axial translation relative to the first part on which said segments are mounted.

6. Device according to any one of claims 1, 4 or 5, **characterised in that** said segments are distributed axially along said first part by means of spacer rings (29).

## Patentansprüche

1. Vorrichtung für den Einsatz einer Dämpfung einer Bewegung und/oder von Stößen und/oder von Vibrationen zwischen zwei zylindrischen Stücken (21, 25), die aufeinander in Translation und mit Reibung gleiten, bei der die Dämpfung durch Anlegen einer radial senkrecht auf die Translationsbewegung der beiden Stücke ausgeübten Kraft durch mindestens ein elastisches Segment (23) erfolgt, das eines der Stücke (25) umgibt und sich im Inneren des anderen (21) befindet, in Translation mit einem der Stücke (21) verbunden ist und die Reibungskraft auf das andere Stück (25) ausübt, wobei die Vorrichtung zwei zylindrische Stücke (21, 25) umfasst, die aufeinander gleiten und miteinander in Translation und Reibung verbunden sind, wobei mindestens ein elastisches Segment (23) aus Stahl oder dergleichen fest mit einem ersten der Stücke (21) verbunden ist und auf eine Reibungsbüchse (24) einwirkt, eventuell umfassend eine Verkleidung aus einem Reibungsmaterial, die das Segment bei der radialen Verformung an die zylindrische Fläche gegenüber dem zweiten Stück (25) anlegt, wobei die Büchse mindestens einen Schlitz oder Einschnitt umfasst, der von einem Rand zum anderen der Büchse in Längsrichtung geht, **dadurch gekennzeichnet, dass** das oder die Segment(e) (23) innen im ersten Stück (21) montiert ist (sind) und die Büchse auf die Außenfläche des zweiten Stücks (25) anlegt(en).

2. Vorrichtung nach Anspruch 1, **dadurch gekennzeichnet, dass** das oder die Segmente eine extreme radiale Steifigkeit besitzen, die es ermöglicht, sehr rasch eine Kraft zu entwickeln, die sich der Bewegung entgegen stellt.

3. Vorrichtung nach Anspruch 1 oder 2, bei der Mittel (49), die es ermöglichen, die radiale Kraft zu variieren, vorgesehen sind.

4. Vorrichtung nach Anspruch 1, bei der die Vorrichtung mehrere Segmente umfasst und die Segmente auf dem ersten Stück im Inneren eines mit dem Stück verbundenen Gehäuses montiert sind.

5. Vorrichtung nach Anspruch 4, **dadurch gekennzeichnet, dass** eine elastische Scheibe (27), deren axiale Kraft größer als die zu dämpfende Kraft ist, vorgesehen ist, die die Segmente in dem Gehäuse hält und die Feststellung der Reibungsbüchse in axialer Translation in Bezug auf das erste Stück, auf dem die Segmente montiert sind, gewährleistet.

6. Vorrichtung nach einem der Ansprüche 1, 4 oder 5, **dadurch gekennzeichnet, dass** die Segmente axial entlang des ersten Stücks mit Hilfe von Abstandsringen (29) verteilt sind.
